Europäisches Patentamt

European Patent Office

Office européen des brevets

(11) Publication number: **0 411 608 A2**

# EUROPEAN PATENT APPLICATION

(21) Application number: **90114766.0**

(51) Int. Cl.⁵: **H02J 7/24**

(22) Date of filing: **01.08.90**

(30) Priority: **01.08.89 JP 200532/89**

(43) Date of publication of application:
**06.02.91 Bulletin 91/06**

(84) Designated Contracting States:
**DE FR GB**

(71) Applicant: **MITSUBISHI DENKI KABUSHIKI KAISHA**
**2-3, Marunouchi 2-chome Chiyoda-ku**
Tokyo(JP)

(72) Inventor: **Itoh, Kenji, C/o Mitsubishi Denki K.K.**
**Himeji Works, No. 540 Chiyoda-cho**
**Himeji-shi, Hyogo(JP)**

(74) Representative: **Lehn, Werner, Dipl.-Ing. et al**
**Hoffmann, Eitle & Partner Patentanwälte**
**Arabellastrasse 4e 4**
**D-8000 München 81(DE)**

(54) **Control device for vehicle AC generator.**

(57) A vehicle AC generator control device with a regulator, which comprises: voltage detector (151) for detecting the system voltage of a charging system which includes an AC generator (1) which is driven by an engine and has an armature coil (11) and a field coil (12), a battery (2), and a vehicle electrical load (4); and driver (152) for driving an switching element connected in series to the field coil (12), switching element being turned on and off by a detection signal of the voltage detector (151), to control field current thereby to adjust the system voltage to a predetermined value, characterized in that the voltage detector (151) has a grounding terminal (E21) which is connected to the negative terminal of the battery (2).

FIG. 1

EP 0 411 608 A2

# CONTROL DEVICE FOR VEHICLE AC GENERATOR

## BACKGROUND OF THE INVENTION

This invention relates to a control device for a vehicle AC generator, and more particularly to a control device for a vehicle AC generator large in capacity which can stably control the battery charging voltage (hereinafter referred to as "a vehicle AC generator control device", when applicable).

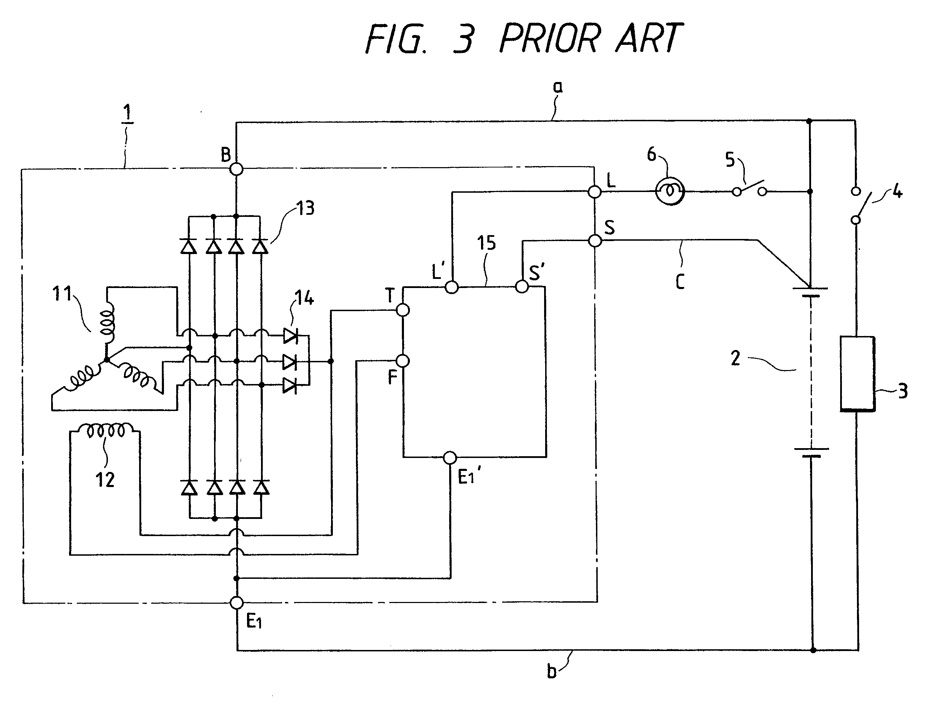

Fig. 3 is a wiring diagram for a description of the battery charging operation of a conventional vehicle AC generator control device.

In Fig. 3, reference numeral 1 designates an AC generator mounted on a vehicle and driven by an engine, which comprises: an armature coil 11 generating three-phase AC voltage; a field coil 12; a main rectifier 13 including neutral point diodes for full-wave rectifying the three-phase output of the armature coil 11; an auxiliary rectifier 14 for splitting the output of the main rectifier 13 to mainly supply field current; and a regulator 15 built in the AC generator 1 to regulate the system voltage to a predetermined value. Further in Fig. 3, reference numeral 2 designates a battery; 3, a vehicle electric load; 4, a load switch; 5, a key switch; and 6, a generation indicating lamp. Further in Fig. 3, reference character (a) designates a charging line connected between output terminal B of the AC generator 1 and the battery 2; (b), a grounding line connected between grounding terminal E1 of the AC generator 1 and the battery 2; and (c), a first detecting line for detecting the system voltage using the regulator 15.

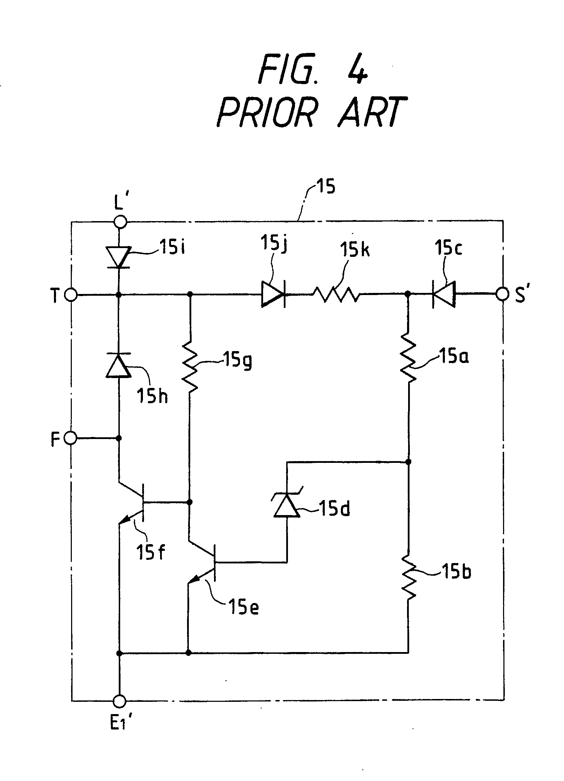

Fig. 4 is an electrical circuit diagram of the regulator 15 shown in Fig. 3. In Fig. 4, reference characters 15a and 15b designate voltage dividing resistors for dividing through a diode 15c the system voltage which is applied to terminals S and S′; 15d, a Zener diode connected to the voltage division point (or connecting point) of the voltage dividing resistors 15a and 15b, these elements 15a through 15d detecting the system voltage. Further in Fig. 4, reference character 15e designates a drive transistor which is driven when the Zener diode 15d is rendered conductive; 15f, a power transistor driven by the drive transistor 15e; 15g, a resistor connected to the base of the power transistor 15f; 15h, a diode for absorbing the serge voltage induced when the power transistor 15f is rendered non-conductive; and 15i, a reverse current preventing diode. The output terminal of the auxiliary rectifier 14 is connected through a diode 15j and a resistor 15k to the voltage dividing resistors 15a and 15b, so that, when it becomes impossible to detect the system voltage for instance because the first detecting line (c) is disconnected, the output voltage of the auxiliary rectifier 14 is detected to prevent the occurrence of the difficulty that the system voltage comes out of control.

Now, the operation of the circuit thus organized will be described. When the key switch 5 is closed, an initial excitation current flows through the battery 2, key switch 5, generation indicating lamp 6, reverse current preventing diode 15i, field coil 12 and power transistor 15f, as a result of which the generation indicating lamp 6 is turned on, thus indicating a non-power-generation state, and the generator becomes ready for power generation. Thereafter, the engine is started, and the AC generator is also started. Therefore, the output voltage of the auxiliary rectifier 14 rises, so that the difference between the potentials at two terminals of the generation indicating lamp 6 is decreased, and finally it becomes zero. As a result, the generating indicating lamp 6 is turned off, thus indicating a normal power generation state. On the other hand, the system voltage is applied through the positive terminal of the battery 2 and the first detecting line (c) to the external terminal S of the AC generator 1 and to the external terminal S′ of the regulator 15. Therefore, the system voltage is applied through the diode 15C to the voltage dividing resistors 15a and 15b so as to be detected by the latter 15a and 15b. When the voltage at the voltage division point of the voltage dividing resistors 15a and 15b exceeds the Zener voltage of the Zener diode 15d as the system voltages increases, the drive transistor 15e is rendered conductive, and the power transistor 15f is therefore rendered rendered non-conductive. In contrast, when the system voltage decreases and the voltage at the voltage division point becomes lower than the Zener voltage, then the drive transistor 15e is rendered non-conductive, and the power transistor 15f is therefore rendered conductive. That is, the power transistor 15f is rendered non-conductive or conductive respectively in response to the rise or fall of the system voltage, so that the field current applied to the field coil 13 is controlled in an on and off mode, whereby the system voltage is maintained constant. In the case where the first detecting line (c) is disconnected for some reason, the output voltage of the auxiliary rectifier 14 is applied through the diode 15j and the resistor 15k to the voltage dividing resistors 15a and 15b, as a result of which the voltage control is made with a regulating voltage slightly higher than the normal regulating voltage. With the control device thus constructed, the system voltage is detected through the first detecting line (c) from the positive terminal of the battery 2, and therefore the voltage drop caused by the resistance of the charging line (a) can be compensated. Thus, the control device is considerably effective in stabilization of the battery charging voltage.

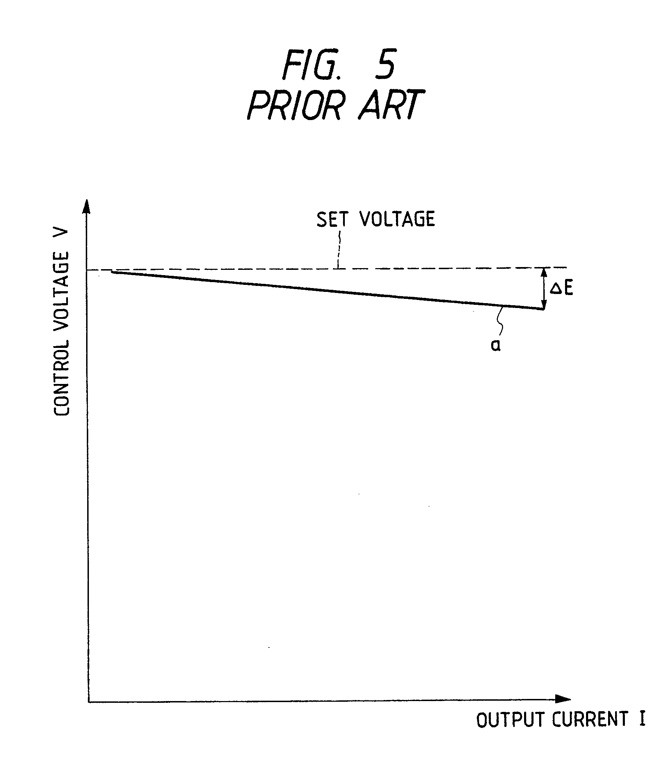

However, since, in the conventional control device, the ground potential of the regulator 15 is the ground terminal potential of the AC generator 1, the voltage drop caused by the resistance of the grounding line (b) cannot be compensated. Hence, as the generator output increases, the battery charging voltage is decreased (the line (a) in Fig. 5). Because of the decrease ($\Delta E$ in Fig. 5), the battery is not sufficiently charged depending on the frequency of use of the vehicle electric load 4, and the service life of the battery may be shortened. That is, the charging system is low in reliability. Recently, vehicle electrical loads tend to increase, thus requiring generators larger in capacity, and increasing the above-described decrease $\Delta E$ as much. Hence, this problem cannot be disregarded.

Further, as compared with the output of the main rectifier 13 connected to the battery, the output of the auxiliary rectifier 14 includes plenty of rectification ripple components, so that the control device is lacking in the stability of control.

## SUMMARY OF THE INVENTION

Accordingly, an object of this invention is to eliminate the above-described difficulties accompanying a conventional vehicle AC generator control device. More specifically, an object of the invention is to provide a vehicle AC generator control device in which it is possible to prevent the battery charging voltage from decreasing by the resistance of the grounding line in the charging system even when the generator output increases, and erroneous control due to ripples is prevented.

A vehicle AC generator control device according to the first aspect of the invention has a regulator which comprises: voltage detecting means for detecting the system voltage of a charging system including an AC generator, a battery, and a vehicle electrical load; and drive means for driving a switching element connected in series to the field coil of the generator, the voltage detecting means having a grounding terminal which is connected to the negative terminal of the battery.

In the vehicle AC generator control device according to the second aspect of the invention, the detection signal of the voltage detecting means is transferred to the drive means by isolated transfer means.

In the vehicle AC generator control device according to the first aspect of the invention, the voltage detecting means has a detecting line on the grounding side, so as to compensate the voltage drop caused by the resistance of the grounding line, thereby to minimize the variation of the battery charging voltage which is caused by the variation of the generator output.

In the vehicle AC generator control device according to the second aspect of the invention, the isolated transfer means eliminates the erroneous control of the voltage detecting means which is caused by the rectification ripple component of the auxiliary rectifier, thus providing a stable control operation.

## BRIEF DESCRIPTION OF THE DRAWINGS

Fig. 1 is a wiring diagram, partly as a block diagram, for a description of the battery charging operation of a vehicle AC generator control device according to one embodiment of this invention,

Fig. 2 is an electrical circuit diagram of a regulator in the control device shown in Fig. 1,

Fig. 3 is a wiring diagram, partly as a block diagram, for a description of the battery charging operation of a conventional vehicle AC generator control device,

Fig. 4 is an electrical circuit diagram of a regulator in the control device shown in Fig. 3, and

Fig. 5 is a graphical representation indicating the relation between battery charging voltage and generator output current in the conventional vehicle AC generator control device.

## DETAILED DESCRIPTION OF THE INVENTION

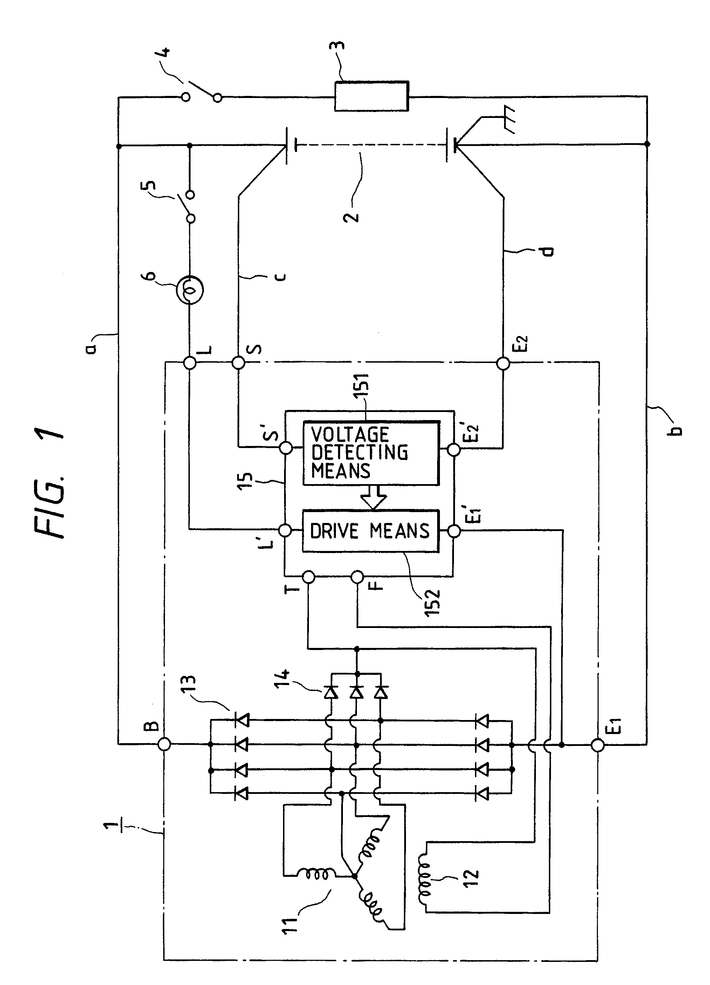

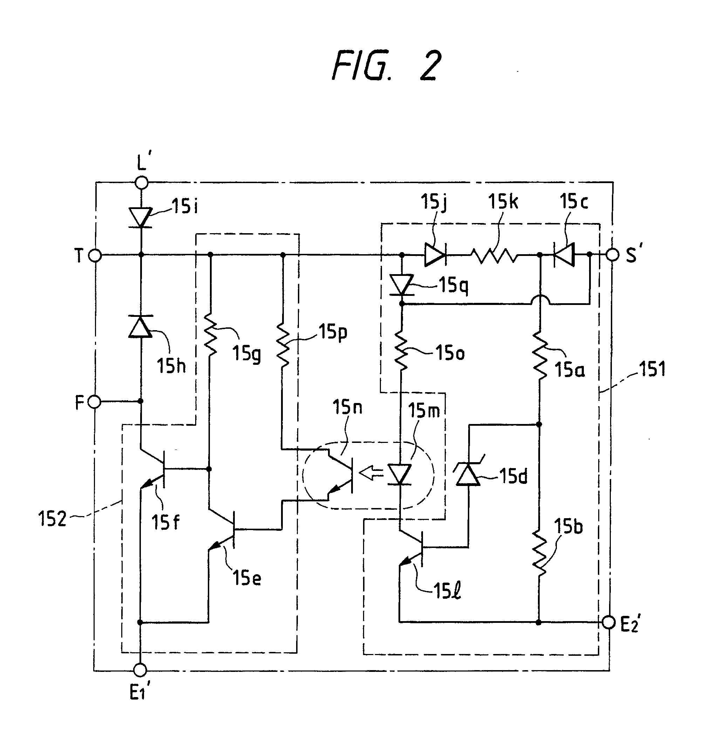

A preferred embodiment of this invention will be described with reference to Figs. 1 and 2.

Fig. 1 is a circuit diagram, partly as a block diagram, for a description of the charging operation of the control device according to the invention. As is apparent from comparison of Fig. 1 with Fig. 3, the control circuit is different from the above-described conventional one in that a ground potential detecting terminal E2' is provided as an external terminal of a regulator 15, and the terminal E2' is connected through an external terminal E2 of the AC generator 1 and a second detecting line (d) to the negative terminal of the battery 2. Fig. 2 is a circuit diagram showing the arrangement of the regulator 15 in more detail. Roughly stated, the regulator 15 is made up of voltage detecting means 151, drive means 152, and isolated transfer means, namely, a photo-coupler (15m and 15n) provided between the two means 151 and 152. Further in Fig. 2, reference character 15ℓ designates a detecting transistor which is driven when a Zener diode 15d is rendered conductive; 15m and 15n, the aforementioned photo-coupler made up of a light emitting diode 15m and a light-sensitive transistor 15n to transfer the detection signal of the detecting transistor 15ℓ to the drive transistor 15e; 15o and 15p, current limiting resistors for determining the drive currents of the light emitting diode 15m and the light-sensitive transistor 15n; and 15q, a diode which, when the first detecting line (c) is disconnected, obtains drive current for the light emitting diode 15m from the output of the auxiliary rectifier 14.

Now, the reason why the voltage detecting means 151 , the drive means 152 and the isolated transfer means (15m and 15n) are provided will be described.

It is easily conceived that the voltage detecting means 151 is connected to the drive means 152 for instance by directly connecting the collector of the detecting transistor 15ℓ to the base of the power transistor 15f. However, the method is disadvantageous in that, because of the potential difference between the ground potentials $E1'$ and $E2'$ ($E1' < E2'$ with the increasing output current), the drive means 152 may operate erroneously. On the other hand, the output of the auxiliary rectifier 14 is more in rectification ripple component than that of the main rectifier 13 connected to the battery 2. Hence, in order to stably operate the voltage detecting means 151, it is essential to contain the output of the auxiliary rectifier 14 in the drive means 152. In order to solve these problems, the isolated transfer means is provided which is the photo-coupler made up of the light emitting diode 15m and the light-sensitive transistor 15n.

The operation of the control device thus arranged will be described. When the engine starts, the AC generator 1 starts power generation, and the system voltage is applied through the detecting lines (c) and (d) to the regulator 15. In the regulator 15, the system voltage is applied through the diode 15c to the voltage dividing resistors 15a and 15b so as to be detected with the aid of the Zener diode 15d. When the system voltage increases, and the voltage at the voltage division point of the voltage dividing resistors 15a and 15b exceeds the Zener voltage of the Zener diode 15d, then the detecting transistor 15ℓ is rendered conductive, and the light emitting diode 15m is rendered conductive (operated). As a result, the light-sensitive transistor 15n is rendered conductive by light transfer, and therefore the drive transistor 15e is rendered conductive, so that the power transistor 15f is rendered non-conductive. When, on the other hand, the system voltage decreases, and the voltage at the voltage division point becomes the Zener voltage or lower, then the detecting transistor 15ℓ is rendered non-conductive, and the light emitting diode 15m is also rendered non-conductive. As a result, the light-sensitive transistor 15n and the drive transistor 15e are both rendered non-conductive, and the power transistor 15e is rendered conductive. Thus, similarly as in the conventional control device, depending on the system voltage, the power transistor 15f is rendered conductive or non-conductive; that is, the field current is controlled, whereby the system voltage is regulated to a predetermined value. As was described before, the ground terminal $E2'$ of the voltage detecting circuit (i.e. the ground terminal of the voltage dividing resistor 15b and the emitter of the detecting transistor 15ℓ) is connected through the terminal E2 and the second detecting line (d) to the negative terminal of the battery 2. Hence, in detecting the system voltage, the voltage drop of the charging line (a) caused by the first detecting line (c) is compensated, and the voltage drop of the grounding line (b) is also compensated. Therefore, the battery charging voltage can be controlled substantially constant even if the output of the generator changes.

In the above-described embodiment, the photo-coupler is employed as the isolated transfer means; however, the same effect can be obtained by replacing it with other isolated transfer means.

As is apparent from the above description, according to the invention,

(1) In the control device, the grounding terminal of the voltage detecting means adapted to detect the charging system voltage is connected to the negative terminal of the battery. Therefore the voltage drop caused by the resistance oi the grounding line can be compensated, whereby the battery charging voltage can be controlled stable irrespective of the output of the generator.

(2) The output signal of the voltage detecting means, namely, the detecting transistor is transferred to the drive means, namely, the drive transistor through the isolated transfer means, namely, the photo-coupler in an isolation transfer mode; hence, the driving operation is carried out stable irrespective of the potential difference between the grounding terminal of the AC generator and the grounding terminal of the voltage detecting means.

(3) In the control device of the invention, the drive means, namely, the drive transistor is driven by the isolated transfer means. Therefore the driving operation is carried out stably even when the output of the generator increases and accordingly the ripple component is increased in rectification.

(4) The employment of the isolated transfer means makes it possible to provide the voltage detecting means only outside the AC generator. Accordingly, the generator can be stably controlled with high accuracy, and particularly the battery charging voltage can be controlled stably even when an AC generator large in capacity is used.

## Claims

1. A control device for a vehicle AC generator which is driven by an engine and has an armature coil and a field coil, said control device comprising: voltage detecting means for detectirg a system voltage of a charging system which includes said AC generator, a battery, and a vehicle electrical load; and
drive means for driving a switching element connected in series to said field coil, said switching element being turned on and off by a detection signal of said voltage detecting means, to control field current thereby to adjust said system voltage to a predetermined value;
wherein a grounding terminal of said voltage detecting means is connected to a negative terminal of said battery.

2. A control device for a vehicle AC generator as claimed in claim 1, further comprising isolated transfer means for transferring said detecting signal of said voltage detecting means to said drive means.

3. A control device for a vehicle AC generator as claimed in claim 2, wherein said isolated transfer means comprises a light emitting diode and a light sensitive transistor.

FIG. 1

VOLTAGE DETECTING MEANS

DRIVE MEANS

EP 0 411 608 A2

# FIG. 2

FIG. 3 PRIOR ART

EP 0 411 608 A2

# FIG. 4
## PRIOR ART

# FIG. 5
# PRIOR ART